# EUROPEAN PATENT APPLICATION

(11) **EP 4 648 528 A1**
(43) Date of publication of application: **12.11.2025**
(21) Application number: 23914456.1
(22) Date of filing: 06.12.2023
(51) Int. Cl.: H04W 74/00

(54) **DATA TRANSMISSION METHOD AND APPARATUS**

(30) Priority: 03.01.2023 CN 202310004561
(71) Applicant: Datang Mobile Communications Equipment Co., Ltd., Beijing 100085 (CN)
(72) Inventor: ZHANG, Yujie, Beijing 100085 (CN); BAI, Wei, Beijing 100085 (CN)
(74) Representative: Studio Torta S.p.A.
(86) International application number: PCT/CN2023/136698
(87) International publication number: WO 2024/146322

(57) **Abstract**

The embodiments of the present disclosure relate to the technical field of communications. Provided are a data transmission method and apparatus. The method comprises: a terminal receiving feedback information sent by a network device, wherein the feedback information is used for indicating the situation of the network device receiving uncoordinated random access and transmission (URAT) data; and according to the feedback information, determining an operation of the terminal, wherein the operation comprises stopping sending the URAT data to the network device, or re-sending the URAT data to the network device.

## Description

### CROSS-REFERENCES TO RELATED APPLICATIONS

The present application claims priority to Chinese patent application No. 202310004561.8 filed on January 03, 2023, entitled "Data Transmission Method and Apparatus", which is hereby incorporated by reference in its entirety.

### FIELD

The present application relates to the field of communication, and in particular, to methods and apparatuses for data transmission.

### BACKGROUND

With the continuous growth of a quantity of terminals in the network, it is expected that a density of terminals may reach tens of millions per square kilometer in next few years.

Limited by current initial access and data transmission technologies, it is impossible to accommodate a massive quantity of terminals to access the network using traditional competitive access technologies. Moreover, traditional network transmission resources cannot support data transmission requirements of a huge quantity of terminals. Uncoordinated random access and transmission (URAT) may achieve random access and multiple access transmission without requiring or requiring only small coordination between network devices and terminals, and may better meet the data transmission requirements of a huge quantity of terminals.

However, performing data transmission using URAT would result in low utilization rate of spectrum resources.

### BRIEF SUMMARY

Embodiments of the present application provide methods and apparatuses for data transmission, to solve a problem of low utilization rate of spectrum resources caused by performing data transmission using uncoordinated random access and transmission (URAT).

An embodiment of the present application provides a method for data transmission, performed by a terminal, including:
receiving feedback information sent from a network device, where the feedback information is used to indicate a situation that the network device receives uncoordinated random access and transmission (URAT) data; and
determining an operation of the terminal based on the feedback information, where the operation includes stopping sending the URAT data to the network device, or resending the URAT data to the network device.

In an embodiment, determining the operation of the terminal based on the feedback information includes:
in case that the feedback information is matched with feedback information determined by the terminal, the operation includes stopping sending the URAT data to the network device; or
in case that the feedback information is mismatched with feedback information determined by the terminal, the operation includes resending the URAT data to the network device.

In an embodiment, in case that the terminal does not receive feedback information sent from the network device, resending the URAT data is performed.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, receiving feedback information sent from the network device includes:
receiving the feedback information sent from the network device within a given time window; or
receiving the feedback information sent from the network device based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, receiving the feedback information sent from the network device within the given time window includes:
starting monitoring from a start position of the given time window, and receiving the feedback information sent from the network device.

The terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

In an embodiment, receiving the feedback information sent from the network device based on the given time interval includes:
receiving the feedback information sent from the network device at a target time domain position, where the target time domain position is determined based on the given time interval.

An embodiment of the present application provides a method for data transmission, performed by a network device, including:
in case that uncoordinated random access and transmission (URAT) data are received, determining feedback information associated with the URAT data; and
sending the feedback information to a terminal, where the feedback information is used to indicate a situation that the network device receives the URAT data.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, sending the feedback information to the terminal includes:
sending the feedback information to the terminal within a given time window; or
sending the feedback information to the terminal based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, sending the feedback information to the terminal within the given time window includes:
sending the feedback information to the terminal at any time unit within the given time window.

In an embodiment, sending the feedback information to the terminal based on the given time interval includes:
sending the feedback information to the terminal at a target time domain position, where the target time domain position is determined based on the given time interval.

In an embodiment, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

An embodiment of the present application further provides a terminal, including a memory, a transceiver and a processor,
where the memory is used for storing a computer program, the transceiver is used for receiving and sending data under control of the processor, and the processor is used for reading the computer program in the memory and performing the following operations:
receiving feedback information sent from a network device, where the feedback information is used to indicate a situation that the network device receives uncoordinated random access and transmission (URAT) data; and
determining an operation of the terminal based on the feedback information, where the operation includes stopping sending the URAT data to the network device, or resending the URAT data to the network device.

In an embodiment, determining the operation of the terminal based on the feedback information includes:
in case that the feedback information is matched with feedback information determined by the terminal, the operation includes stopping sending the URAT data to the network device; or
in case that the feedback information is mismatched with feedback information determined by the terminal, the operation includes resending the URAT data to the network device.

In an embodiment, in case that the terminal does not receive feedback information sent from the network device, resending the URAT data is performed.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, receiving feedback information sent from the network device includes:
receiving the feedback information sent from the network device within a given time window; or
receiving the feedback information sent from the network device based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, receiving the feedback information sent from the network device within the given time window includes:
starting monitoring from a start position of the given time window, and receiving the feedback information sent from the network device.

The terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

In an embodiment, receiving the feedback information sent from the network device based on the given time interval includes:
receiving the feedback information sent from the network device at a target time domain position, where the target time domain position is determined based on the given time interval.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing the following operations:
in case that uncoordinated random access and transmission (URAT) data are received, determining feedback information associated with the URAT data; and
sending the feedback information to a terminal, where the feedback information is used to indicate a situation that the network device receives the URAT data.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, sending the feedback information to the terminal includes:
sending the feedback information to the terminal within a given time window; or
sending the feedback information to the terminal based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, sending the feedback information to the terminal within the given time window includes:
sending the feedback information to the terminal at any time unit within the given time window.

In an embodiment, sending the feedback information to the terminal based on the given time interval includes:
sending the feedback information to the terminal at a target time domain position, where the target time domain position is determined based on the given time interval.

In an embodiment, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

An embodiment of the present application further provides an apparatus for data transmission, for use in a terminal, including:
a receiving unit, used for receiving feedback information sent from a network device, where the feedback information is used to indicate a situation that the network device receives uncoordinated random access and transmission (URAT) data; and
a first processing unit, used for determining an operation of the terminal based on the feedback information, where the operation includes stopping sending the URAT data to the network device, or resending the URAT data to the network device.

In an embodiment, in case that feedback information sent from the network device is not received, resending the URAT data is performed.

In an embodiment, the first processing unit is used for, in case that the feedback information is matched with feedback information determined by the terminal, determining that the operation includes stopping sending the URAT data to the network device; or in case that the feedback information is mismatched with feedback information determined by the terminal, determining that the operation includes resending the URAT data to the network device.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, the receiving unit is used for receiving the feedback information sent from the network device within a given time window, or receiving the feedback information sent from the network device based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, the receiving unit is used for starting monitoring from a start position of the given time window, and receiving the feedback information sent from the network device.

The terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

In an embodiment, the receiving unit is used for receiving the feedback information sent from the network device at a target time domain position, where the target time domain position is determined based on the given time interval.

An embodiment of the present application further provides an apparatus for data transmission, for use in a network device, including:
a second processing unit, used for, in case that uncoordinated random access and transmission (URAT) data are received, determining feedback information associated with the URAT data; and
a sending unit, used for sending the feedback information to a terminal, where the feedback information is used to indicate a situation that the network device receives the URAT data.

In an embodiment, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment, the URAT data are original URAT data, or the URAT data are URAT data encoded from original URAT data.

In an embodiment, the feature bit in the URAT data includes at least one of:
first X feature bits in the URAT data;
middle X feature bits in the URAT data; or
last X feature bits in the URAT data,
where X is a positive integer.

In an embodiment, the sending unit is used for sending the feedback information to the terminal within a given time window, or sending the feedback information to the terminal based on a given time interval.

In an embodiment, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment, the sending unit is used for sending the feedback information to the terminal at any time unit within the given time window.

In an embodiment, the sending unit is used for sending the feedback information to the terminal at a target time domain position, where the target time domain position is determined based on the given time interval.

In an embodiment, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

An embodiment of the present application further provides a processor-readable storage medium, where the processor-readable storage medium stores a computer program, and the computer program is used to cause a processor to perform the methods for data transmission described above.

In the methods and apparatuses for data transmission provided by the embodiments of the present application, the terminal receives feedback information sent from a network device, where the feedback information is used to indicate a situation that the network device receives URAT data; and determines the operation of the terminal based on the feedback information, where the operation includes stopping sending the URAT data to the network device, or resending the URAT data to the network device. Therefore, the terminal may determine the operation of the terminal in a targeted manner based on the feedback information, which may not only effectively improve the utilization rate of spectrum resources, but also reduce the delay of URAT communication, which is beneficial to energy saving of the terminal.

### BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.
FIG. 1 is a block diagram of a principle of uncoordinated random access and transmission (URAT) according to an embodiment of the present application;
FIG. 2 is a first schematic flowchart of a method for data transmission according to an embodiment of the present application;
FIG. 3 is a schematic diagram in which a start position of a given time window is adjacent to a time domain position where URAT data are sent according to an embodiment of the present application;
FIG. 4 is a schematic diagram in which a start position of a given time window is not adjacent to a time domain position where URAT data are sent according to an embodiment of the present application;
FIG. 5 is a schematic diagram in which a given time interval is a given fixed value according to an embodiment of the present application;
FIG. 6 is a schematic diagram in which a given time interval is multiple given fixed values according to an embodiment of the present application;
FIG. 7 is a first interactive schematic diagram of a method for data transmission according to an embodiment of the present application;
FIG. 8 is a second interactive schematic diagram of a method for data transmission according to an embodiment of the present application;
FIG. 9 is a third interactive schematic diagram of a method for data transmission according to an embodiment of the present application;
FIG. 10 is a second schematic flowchart of a method for data transmission according to an embodiment of the present application;
FIG. 11 is a schematic structural diagram of a terminal according to an embodiment of the present application;
FIG. 12 is a schematic structural diagram of a network device according to an embodiment of the present application;
FIG. 13 is a first schematic structural diagram of an apparatus for data transmission according to an embodiment of the present application; and
FIG. 14 is a second schematic structural diagram of an apparatus for data transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions provided by the embodiments of the present application may be applicable to various systems, for example, a 6G system.

The terminal in the embodiments of the present application may be a device that provides voice and/or data connectivity to a user, a hand-held device with a wireless connection function, or other processing device connected to a wireless modem. In different systems, the names of the terminal may be different. For example, in a 5G system, the terminal may be called as user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node, a femto, a pico, etc., which are not limited in the embodiments of the present application. In some network structures, a network device may include a centralized unit (CU) node and a distributed unit (DU) node, and the centralized unit and the distributed unit may also be geographically separated.

In an embodiment of the present application, multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

With the continuous increase of a quantity of terminals in the network, uncoordinated random access and transmission (URAT) may achieve random access and multiple access transmission without requiring or requiring only small coordination between network devices and terminals, and may better meet the data transmission requirements of a huge quantity of terminals.

Without requiring coordination between the network device and the terminal means that the network device does not need to acknowledge an access identity of the terminal and does not need to schedule transmission resources.

URAT is an integration and upgrade of the random access technology and the multiple access transmission technology. Initial access and data transmission are no longer regarded as two independent procedures, and are integrated into one procedure, to support the access and transmission of a huge quantity of terminals, reduce delay, and improve success rates of access and transmission.

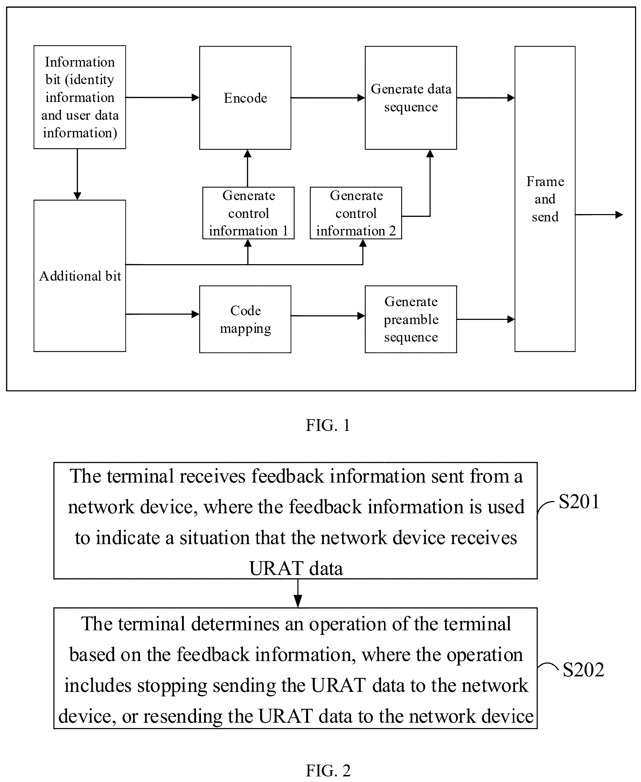

In an embodiment, referring to FIG. 1, FIG. 1 is a block diagram of a principle of URAT according to an embodiment of the present application. The terminal may generate additional bits from its identity information and to-be-transmitted user data information based on information bits; perform code mapping on the additional bits, and generate a preamble sequence; generate control information 1 and control information 2 based on the additional bits; encode the information bits and control information 1; generate a data sequence based on an encoding result and control information 2, and then periodically send the preamble sequence and data sequence until a maximum sending number of the data sequence is reached.

The additional bits are generated from information bits (physical uplink shared channel (PUSCH) data). For example, the additional bits are last A bits of the information bits. For another example, the additional bits are cyclical redundancy check (CRC) bits of the information bits. The information bits may be PUSCH data.

Benefits of using URAT are: on one hand, through joint transmission processing of the identity information and the user data information, dynamic coordination at a network side is simplified, and a quantity of accessed terminals is effectively increased, which is suitable for access and transmission of a huge quantity of terminals; on the other hand, by integrating two procedures of initial access and data transmission, the network device may simultaneously obtain the identity information and the user data information, which shortens transmission delay, and is suitable for burst transmission of small packet data.

In case that data transmission is performed using URAT, the terminal actively initiates data transmission in RRC_IDLE state, but cannot directly determine whether transmission of the URAT data are performed successfully, that is, whether the network device successfully receives the URAT data sent from the terminal. In order to ensure that the URAT data sent from the terminal may be successfully received by the network device, the terminal usually needs to resend the URAT data. In order to ensure that the URAT data sent from all terminals may be successfully received by the network device, it is usually necessary to set a relatively large resending number. The terminal needs to resend the URAT data based on the set resending number, which would result in low utilization rate of spectrum resources.

In order to improve the utilization rate of spectrum resources, it may be considered to design a flexible processing mechanism. After the terminal sends the URAT data to the network device, the network device feeds back reception of the URAT data, and the terminal device may determine whether to perform resending based on the feedback information sent from the network device.

Therefore, an embodiment of the present application provides a method for data transmission. The network device may send feedback information to the terminal, where the feedback information is used to indicate a situation that the network device receives URAT data. The terminal may determine the operation of the terminal based on the feedback information, where the operation includes stopping sending the URAT data to the network device, or resending the URAT data to the network device. Therefore, the terminal determines the operation of the terminal in a targeted manner based on the feedback information, which may not only effectively improve the utilization rate of spectrum resources, but also effectively reduce the delay of URAT communication, which is beneficial to energy saving of the terminal.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

FIG. 2 is a first schematic flowchart of a method for data transmission according to an embodiment of the present application and the method for data transmission may be performed by a terminal. For example, as shown in FIG. 2, the method for data transmission includes the following steps.

S201: the terminal receives feedback information sent from a network device, where the feedback information is used to indicate a situation that the network device receives uncoordinated random access and transmission (URAT) data.

The feedback information may include one or more fields. The feedback information is associated with a sender of the URAT data, or is associated with the URAT data. The sender of the URAT data may be the above-mentioned terminal, or may not be the above-mentioned terminal.

In case that the terminal sends URAT data to the network device, the URAT data includes not only the identity information of the terminal, but also to-be-transmitted user data information. Correspondingly, the network device may determine whether to send feedback information to the terminal based on whether the URAT data sent from the terminal is successfully received, to instruct the operation of the terminal through the feedback information.

In the embodiment of the present application, for the network device, whether sending the feedback information associated with the terminal is used to indicate whether the network device has successfully received the URAT data sent from the terminal. For the terminal, the terminal may determine whether to perform a URAT resending operation based on whether the feedback information associated with the terminal is received to ensure that the network device successfully receives the URAT data.

In an embodiment, in case that the network device successfully receives the URAT data sent from the terminal, the network device may determine the feedback information associated with the terminal and send the feedback information to the terminal; or in case that the network device does not successfully receive the URAT data sent from the terminal, the network device is not required to determine the feedback information associated with the terminal, and would not send the feedback information to the terminal.

In the embodiment of the present application, in case of sending feedback information, the network device does not directly send the feedback information to the corresponding terminal, broadcasts the feedback information to all terminals performing URAT communicate with the network device. Accordingly, after receiving the feedback information sent from the network device in a broadcasting way, each terminal is required to determine whether the feedback information is the feedback information associated with the terminal. In case that the feedback information is the feedback information associated with the terminal, it means that the network device has successfully received the URAT data sent from the terminal, and the terminal is not required to perform the URAT resending operation; otherwise, in case that the feedback information is not the feedback information associated with the terminal, it means that the network device has not successfully received the URAT data sent from the terminal, and the terminal is required to perform the URAT resending operation, to ensure that the network device successfully receives the URAT data.

S202: the terminal determines an operation of the terminal based on the feedback information, where the operation includes stopping sending the URAT data to the network device, or resending the URAT data to the network device.

In the embodiment of the present application, the terminal receives the feedback information sent from the network device, where the feedback information is used to indicate a situation that the network device receives the URAT data; and determines the operation of the terminal based on the feedback information, where the operation includes stopping sending the URAT data to the network device, or resending the URAT data to the network device. Therefore, the terminal may determine the operation of the terminal in a targeted manner based on the feedback information, which may not only effectively improve the utilization rate of spectrum resources, but also reduce the delay of URAT communication, which is beneficial to energy saving of the terminal.

In some embodiments, in case that the feedback information includes one field, the content of the field may be identity information of a terminal sending the URAT data. Therefore, the feedback information may be effectively associated with the terminal sending the URAT data, each terminal receiving the feedback information may determine the operation of the terminal in a targeted manner based on the feedback information. In case that a probability of collision is allowable, the content of the field may also be a feature bit in the URAT data, as long as it may better represent the association relationship with the terminal. In case that the feedback information is consisted of multiple fields, the multiple fields may include, other than the feature bit in the URAT data, feature bits determined based on a time domain position, and/or feature bits determined based on a frequency domain position. Therefore, the feedback information may be effectively associated with the URAT data, each terminal receiving the feedback information may determine the operation of the terminal sending the URAT data in a targeted manner based on the feedback information; and the probability of collision between URAT data sent from different terminals may be further reduced.

In some embodiments, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In some embodiments, the URAT data are original URAT data, or the URAT data are URAT data encoded from original URAT data, which may be set based on actual needs. By associating the feedback information with original URAT data or encoded URAT data, each terminal receiving the feedback information may determine the operation of the terminal sending the URAT data in a targeted manner based on the feedback information, which may not only effectively improve the utilization rate of spectrum resources, but also reduce the delay of URAT communication, which is beneficial to the energy saving of the terminal.

In an embodiment, an encoding operation may be a CRC encoding operation, or other similar encoding operations, which may be set based on actual needs.

In an embodiment, the feature bit in the URAT data includes at least one of:
first X feature bits in the URAT data;
middle X feature bits in the URAT data; or
last X feature bits in the URAT data.

X is a positive integer, and the value of X may be set based on actual needs. The feedback information may be effectively associated with the feature bit in the URAT data, and the feature bit as feedback information would be sent to the terminal, which may not only effectively improve the utilization rate of spectrum resources, but also reduce the delay of URAT communication, which is beneficial to the energy saving of the terminal.

In some embodiments, in case of sending feedback information, the network device may send the feedback information based on a time window, or based on a time interval, which is also known as a time offset way.

In case that the network device sends feedback information based on a time window, the terminal is also required to receive the feedback information based on a time window correspondingly. In case that the network device sends feedback information based on a time interval, the terminal is also required to receive the feedback information based on a time interval correspondingly. These two possible embodiments would be described below in detail.

In an embodiment, the network device sends feedback information based on a time window, and the terminal also receives the feedback information based on a time window correspondingly. Therefore, the terminal may determine the operation of the terminal sending the URAT data in a targeted manner based on the feedback information, which may not only effectively improve the utilization rate of spectrum resources, but also reduce the delay of URAT communication, which is beneficial to energy saving of the terminal.

In an embodiment, in case of sending feedback information based on the time window, the network device may autonomously select a time unit within a given time window and send the feedback information on the selected time unit; correspondingly, the terminal would receive the feedback information sent from the network device within the given time window.

In an embodiment, in case that the terminal receives feedback information sent from the network device within a given time window, since it is impossible to obtain which time unit the network device is within the given time window, the terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

For the terminal, it starts monitoring from the start position of the given time window. It is assumed that the terminal receives feedback information sent from the network device, since the feedback information is not necessarily the feedback information associated with the terminal, in case that the received feedback information is matched with the feedback information determined by the terminal itself, it means that the feedback information is the feedback information of the terminal, and the network device successfully receives the URAT data sent from the terminal. In this case, the terminal is not required to resend the URAT data, and the corresponding operation is stopping sending URAT data to the network device. In case that the received feedback information is mismatched with the feedback information determined by the terminal itself, it means that the feedback information is not the feedback information of the terminal, and the network device has not successfully received the URAT data sent from the terminal. In this case, the terminal is required to resend the URAT data, and the corresponding operation is resending the URAT data to the network device to ensure that the network device may successfully receive the URAT data.

It is assumed that the terminal does not receive feedback information within the entire given time window, it means that the network device has not successfully received the URAT data sent from the terminal. In this case, the terminal is required to resend the URAT data. Therefore, the corresponding operation is resending the URAT data to the network device to ensure that the network device may successfully receive the URAT data.

In an embodiment of the present application, a start position of the given time window is adjacent to a time domain position where the URAT data are sent, or a start position of the given time window is not adjacent to a time domain position where the URAT data are sent. By determining the start position of the given time window, that is, determining the given time window, the terminal may monitor and receive the feedback information within the given time window.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

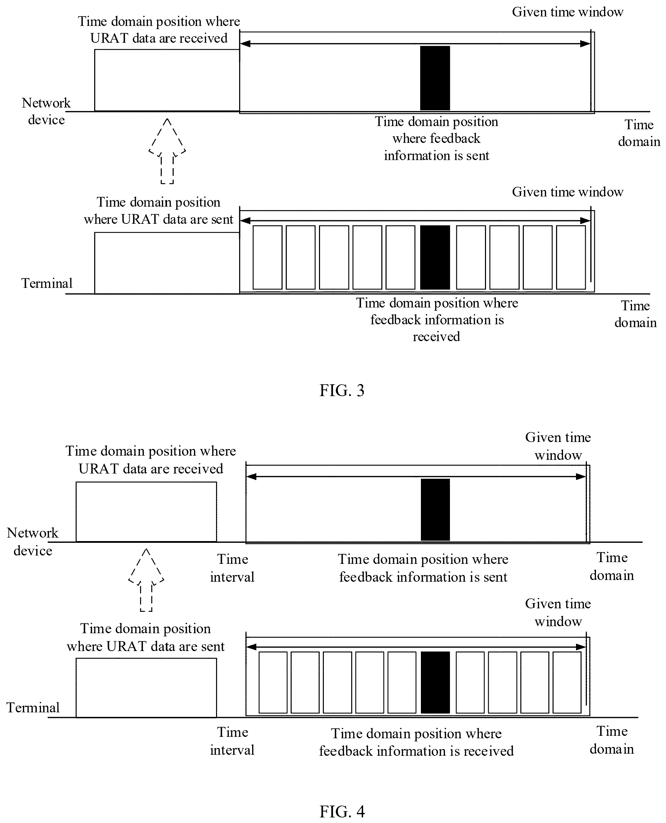

In case that the start position of the given time window is adjacent to the time domain position of sending URAT data, for example, referring to FIG. 3, FIG. 3 is a schematic diagram in which a start position of a given time window is adjacent to a time domain position where URAT data are sent according to an embodiment of the present application. The terminal sends URAT data to the network device, and the network device receives the URAT data. After successfully receiving the URAT data, the network device uses a time domain position where the URAT data are received as the start position of the given time window, autonomously selects a time unit within the given time window and sends the feedback information on the time unit. Since it is impossible for the terminal to obtain which time unit the network device is within the given time window, the terminal is required to start monitoring from the start position of the given time window, and receive the feedback information sent from the network device on the same time unit. In case of determining that the feedback information is feedback information of the terminal, monitoring is stopped; or in case that the feedback information is mismatched with feedback information of the terminal, or in case that the feedback information of the terminal is not received, monitor is performed until an end position of the given time window. The given time window may also be agreed in advance by the network device and the terminal, and is used to send and receive the feedback information.

As shown in FIG. 3, in case that the start position of the given time window is adjacent to the time domain position where the URAT data are sent, in case that determining the given time window, the time domain position where the URAT data are received is used as the start position of the given time window. It is only necessary to predetermine a length of the given time window. By determining the length of the given time window, the end position of the given time window may be determined, thereby determining the given time window. The length of the given time window is a fixed value, and the network device may determine a time domain position where the feedback information is first sent and a time domain position where the feedback information is last sent based on the length of the given time window. Correspondingly, the terminal may also determine the time domain position where the feedback information is first received and the time domain position where the feedback information is last received based on the length of the given time window, to ensure that the terminal may receive the feedback information sent from the network device within the given time window in case that the network device sends the feedback information within the given time window.

In case that the start position of the given time window is not adjacent to the time domain position of sending URAT data, that is, there is a time interval between the start position of the given time window and the time domain position where the URAT data are sent, for example, referring to FIG. 4, FIG. 4 is a schematic diagram in which a start position of a given time window is not adjacent to a time domain position where URAT data are sent according to an embodiment of the present application. The terminal sends URAT data to the network device, and the network device receives the URAT data. After successfully receiving the URAT data, the network device uses a time interval starting from a time domain position where the URAT data are received as the start position of the given time window, autonomously selects a time unit within the given time window and sends the feedback information on the time unit. Since it is impossible for the terminal to obtain which time unit the network device is within the given time window, the terminal is required to start monitoring from the start position of the given time window, and receive the feedback information sent from the network device on the same time unit. In case of determining that the feedback information is feedback information of the terminal, monitoring is stopped; or in case that the feedback information is mismatched with feedback information of the terminal, or in case that the feedback information of the terminal is not received, monitor is performed until an end position of the given time window. The given time window may also be agreed in advance by the network device and the terminal, and is used to send and receive the feedback information.

Combined with FIG. 4, in case that the start position of the given time window is not adjacent to the time domain position where the URAT data are sent, in case that determining the given time window, it is necessary to determine the time interval between the start position of the given time window and the time domain position where the URAT data are sent and the length of the given time window. By determining the time interval and the length of the given time window, the end position of the given time window may be determined, thereby determining the given time window. Both the time interval and the length of the given time window are fixed values, and the network device may determine the time domain position where the feedback information is first sent and a time domain position where the feedback information is last sent based on the time interval and the length of the given time window. Correspondingly, the terminal may also determine the time domain position where the feedback information is first received and the time domain position where the feedback information is last received based on the time interval and the length of the given time window, to ensure that the terminal may receive the feedback information sent from the network device within the given time window in case that the network device sends the feedback information within the given time window.

In an embodiment of the present application, if the network device receives URAT data sent from multiple different terminals on the same time unit, in case of sending feedback information associated with each of the multiple URAT data, the feedback information needs to be sent within the same time window. In case that feedback information is sent within the same time window, feedback information associated with different URAT data may be sent on the same time unit or on different time units, which may be set based on actual needs. No specific limitations are made in the embodiment of the present application.

A solution that the network device sends feedback information based on a time window, and the terminal also receives feedback information based on a time window correspondingly is described in detail above. A solution that the network device sends feedback information based on a time interval and correspondingly, the terminal also receives the feedback information based on a time interval is described in detail below.

In an embodiment, the network device sends feedback information based on a time interval, and the terminal also receives the feedback information based on a time interval correspondingly. Therefore, the terminal may determine the operation of the terminal sending the URAT data in a targeted manner based on the feedback information, which may not only effectively improve the utilization rate of spectrum resources, but also reduce the delay of URAT communication, which is beneficial to energy saving of the terminal.

In an embodiment, in case of sending feedback information based on the time interval, the network device may determine the target time domain position based on a given time interval and send the feedback information at the target time domain position; correspondingly, the terminal will also determine the target time domain position based on a given time interval and receive the feedback information at the target time domain position. The terminal may determine the operation of the terminal sending URAT data in a targeted manner based on the feedback information.

For the terminal, it receives feedback information at the target time domain position. Since the feedback information is not necessarily the feedback information associated with the terminal, in case that the received feedback information is matched with the feedback information determined by the terminal itself, it means that the feedback information is the feedback information of the terminal, and the network device successfully receives the URAT data sent from the terminal. In this case, the terminal is not required to resend the URAT data, and the corresponding operation is stopping sending URAT data to the network device. In case that the received feedback information is mismatched with the feedback information determined by the terminal itself, it means that the feedback information is not the feedback information of the terminal, and the network device has not successfully received the URAT data sent from the terminal. In this case, the terminal is required to resend the URAT data, and the corresponding operation is resending the URAT data to the network device to ensure that the network device may successfully receive the URAT data.

It is assumed that the terminal does not receive feedback information at the target time domain position, it means that the network device has not successfully received the URAT data sent from the terminal. In this case, the terminal is required to resend the URAT data. Therefore, the corresponding operation is resending the URAT data to the network device, to ensure that the network device may successfully receive the URAT data.

In an embodiment of the present application, the given time interval may be a fixed value or multiple fixed values, which may be set based on actual needs.

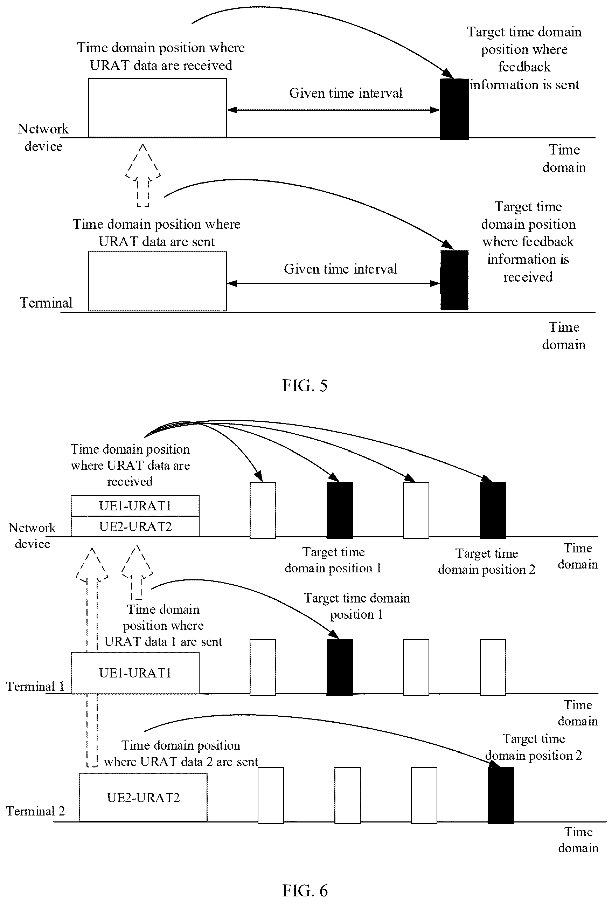

In case that the given time interval is a fixed value, for example, referring to FIG. 5, FIG. 5 is a schematic diagram in which a given time interval is a given fixed value according to an embodiment of the present application. The terminal sends URAT data to the network device, and the network device receives the URAT data. After successfully receiving the URAT data, the network device uses a given time interval starting from a time domain position where the URAT data are sent as the target time domain position where the URAT data are received and sends the URAT data at the target time domain position. After sending the URAT data, the terminal uses a given time interval starting from a time domain position where the URAT data are sent as the target time domain position where the feedback information is received and receives the feedback information at the target time domain position.

Combined with FIG. 5, in case that the given time interval is a fixed value, in case of determining the target time domain position where the feedback information is sent, it is only necessary to predetermine the given time interval, and the target time domain position where the feedback information is sent may be determined by the given time interval. The given time interval is a fixed value, and the network device may determine the target time domain position where the feedback information is sent based on the given time interval. Correspondingly, the terminal may also determine the target time domain position where the feedback information is received based on the given time interval, to ensure that the terminal may receive the feedback information sent from the network device at the target time domain position in case that the network device sends the feedback information at the target time domain position.

In case that the given time interval is multiple given fixed values, for example, referring to FIG. 6, FIG. 6 is a schematic diagram in which a given time interval is multiple given fixed values according to an embodiment of the present application. It is assumed that four time intervals are given, both terminal 1 and terminal 2 send URAT data to the network device, and the network device receives the URAT data sent from terminal 1 and terminal 2 respectively. After successfully receiving the URAT data sent from terminal 1 and terminal 2 respectively, the network device is required to send feedback information associated with each of terminal 1 and terminal 2. In case of sending the feedback information associated with terminal 1, the network device uses a given time interval 1 starting from a time domain position where URAT data 1 sent from terminal 1 are received as a target time domain position 1 where the feedback information associated with terminal 1 is sent and sends the feedback information associated with terminal 1 at the target time domain position 1. After sending the URAT data 1, terminal 1 uses a given time interval starting from a time domain position where the URAT data 1 are sent as the target time domain position 1 where the feedback information associated with terminal 1 is received and receives the feedback information associated with terminal 1 at the target time domain position 1.

In case of sending the feedback information associated with terminal 2, the network device uses a given time interval 2 starting from a time domain position where URAT data 2 sent from terminal 2 are received as a target time domain position 1 where the feedback information associated with terminal 1 is sent and sends the feedback information associated with terminal 2 at the target time domain position 2. After sending the URAT data 1, terminal 2 uses a given time interval starting from a time domain position where the URAT data 2 are sent as the target time domain position 2 where the feedback information associated with terminal 2 is received and receives the feedback information associated with terminal 2 at the target time domain position 2.

Combined with FIG. 6, multiple fixed time intervals are respectively associated with feedback information. For example, there are 10 fixed values, and indexes of these fixed values are 0, 1, ..., 8, and 9, respectively. Indexes of these fixed values associated with the feedback information may be determined based on modulo result of the feedback information and 10, and the fixed value corresponding to the indexes of these fixed values is the time interval corresponding to the feedback information. The target time domain position where the network device sends the feedback information and the target time domain position where the terminal receives the feedback information are determined based on the time interval.

Combined with the above FIG. 6, it may be seen that in case that a quantity of terminals is multiple, a quantity of given time intervals is multiple, and a given time interval corresponding to different terminals is one of multiple given time intervals. In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

In some embodiments, in case that the terminal determines the operation of the terminal based on the feedback information, the received feedback information may be matched with the feedback information determined by the terminal itself. In case that the received feedback information is matched with the feedback information determined by the terminal itself, it means that the feedback information is the feedback information of the terminal, and the network device successfully receives the URAT data sent from the terminal. In this case, the terminal is not required to resend the URAT data, and the corresponding operation is stopping sending URAT data to the network device. Alternatively, in case that the received feedback information is mismatched with the feedback information determined by the terminal itself, it means that the feedback information is not the feedback information of the terminal, and the network device has not successfully received the URAT data sent from the terminal. In this case, the terminal is required to resend the URAT data, and the corresponding operation is resending the URAT data to the network device, to ensure that the network device may successfully receive the URAT data. Therefore, the terminal determines the operation of the terminal in a targeted manner based on the feedback information, which may not only effectively improve the utilization rate of spectrum resources, but also reduce the delay of URAT communication, which is beneficial to energy saving of the terminal.

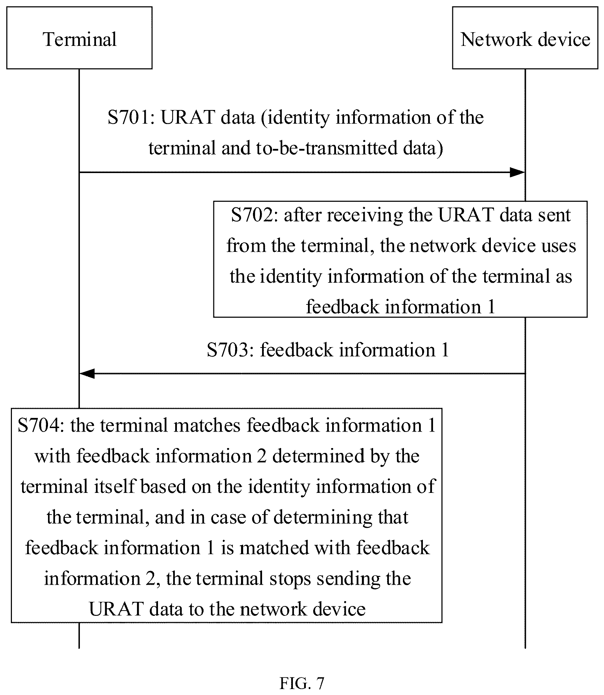

In order to facilitate understanding of the method for data transmission provided by an embodiment of the present application, the method for data transmission provided by an embodiment of the present application is described in detail below, taking different feedback information as an example, in combination with the following FIG. 7, FIG. 8 and FIG. 9.

In some embodiments, identity information of a terminal being feedback information associated with the terminal is taken as an example, referring to FIG 7, FIG. 7 is a first interactive schematic diagram of a method for data transmission according to an embodiment of the present application. The method for data transmission may include the following steps.

S701: a terminal sends URAT data to a network device, where the URAT data includes identity information of the terminal and to-be-transmitted data.

S702: after receiving the URAT data sent from the terminal, the network device uses the identity information of the terminal as feedback information 1.

S703: the network device sends feedback information 1.

S704: the terminal matches feedback information 1 with feedback information 2 determined by the terminal itself based on the identity information of the terminal. In case of determining that feedback information 1 is matched with feedback information 2, the terminal stops sending the URAT data to the network device.

In case that feedback information 1 is mismatched with feedback information 2, it means that feedback information 1 is not feedback information associated with the terminal, and the network device has not successfully received the URAT data sent from the terminal. Therefore, the terminal is required to resend the URAT data to the network device, that is, perform a URAT resending operation.

In this way, the terminal receives feedback information 1 sent from the network device, matches feedback information 1 with feedback information 2 determined by the terminal itself based on the identity information of the terminal, and in case of determining that feedback information 1 is matched with feedback information 2, the terminal stops sending the URAT data to the network device. The terminal may avoid repeatedly sending the URAT data to the network device in case that the network device has successfully received the URAT data sent from the terminal, which may not only effectively improve the utilization rate of spectrum resources, but also reduce the delay of URAT communication, which is beneficial to the energy saving of the terminal.

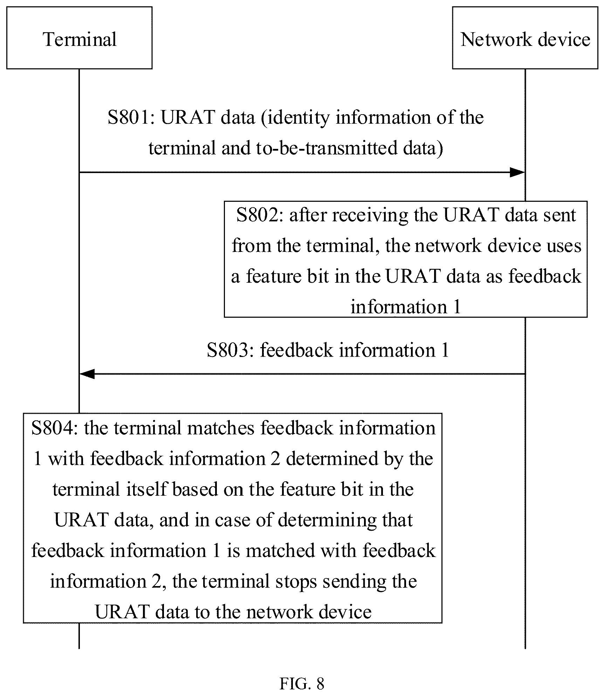

In some embodiments, a feature bit in the URAT data sent being the feedback information associated with the terminal is taken as an example, referring to FIG. 8, FIG. 8 is a second interactive schematic diagram of a method for data transmission according to an embodiment of the present application. The method for data transmission may include the following steps.

S801: a terminal sends URAT data to a network device, where the URAT data includes the identity information of the terminal and to-be-transmitted data.

S802: after receiving the URAT data sent from the terminal, the network device uses a feature bit in the URAT data as feedback information 1.

For example, the URAT data may be original URAT data or encoded URAT data, which may be set based on actual needs.

In an embodiment, in case that the URAT data are the original URAT data, the feature bit in the URAT data may be first X feature bits of the original URAT data, or last X feature bits of the original URAT data, etc., which may be set based on actual needs. In case that the URAT data are the encoded URAT data, the feature bit in the URAT data may be first X feature bits of the encoded URAT data, or last X feature bits of the encoded URAT data, etc., and may be set specifically based on actual needs.

S803: the network device sends feedback information 1.

S804: the terminal matches feedback information 1 with feedback information 2 determined by the terminal itself based on the feature bit in the URAT data. In case of determining that feedback information 1 is matched with feedback information 2, the terminal stops sending the URAT data to the network device.

In case that feedback information 1 is mismatched with feedback information 2, it means that feedback information 1 is not feedback information associated with the terminal, and the network device has not successfully received the URAT data sent from the terminal. Therefore, the terminal is required to resend the URAT data to the network device, that is, perform the URAT resending operation.

In this way, the terminal receives feedback information 1 sent from the network device, matches feedback information 1 with feedback information 2 determined by the terminal itself based on the feature bit in the URAT data, and in case of determining that feedback information 1 is matched with feedback information 2, the terminal stops sending the URAT data to the network device. The terminal may avoid repeatedly sending the URAT data to the network device in case that the network device has successfully received the URAT data sent from the terminal, which may not only effectively improve the utilization rate of spectrum resources, but also reduce the delay of URAT communication, which is beneficial to the energy saving of the terminal.

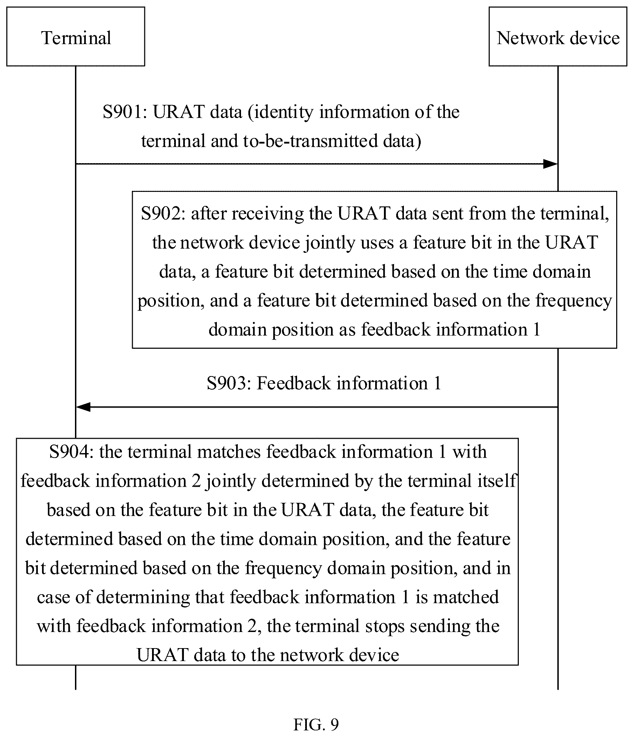

In some embodiments, in order to reduce the collision probability between feedback information of different terminal devices, a feature bit in the URAT data sent, a feature bit determined based on the time domain position, and a feature bit determined based on the frequency domain position jointly being feedback information associated with the terminal is taken as an example, referring to FIG. 9, FIG. 9 is a third interactive schematic diagram of a method for data transmission according to an embodiment of the present application. The method for data transmission may include the following steps.

S901: a terminal sends URAT data to a network device, where the URAT data includes the identity information of the terminal and to-be-transmitted data.

S902: after receiving the URAT data sent from the terminal, the network device jointly uses a feature bit in the URAT data, a feature bit determined based on a time domain position, and a feature bit determined based on a frequency domain position as feedback information 1.

For example, the URAT data may be original URAT data or encoded URAT data, which may be set based on actual needs.

In an embodiment, in case that the URAT data are the original URAT data, the feature bit in the URAT data may be first X feature bits of the original URAT data, or last X feature bits of the original URAT data, etc., which may be set based on actual needs. In case that the URAT data are the encoded URAT data, the feature bit in the URAT data may be first X feature bits of the encoded URAT data, or last X feature bits of the encoded URAT data, etc., and may be set specifically based on actual needs.

In an embodiment, the feature bit determined based on the time domain position may be determined based on a time domain position of a preamble in the URAT communication. In an embodiment, the terminal has multiple positions for sending preambles in the time domain, that is, there are multiple different time frequency positions for sending preambles. Therefore, in case that the terminal sends a preamble, a time frequency position for sending the preamble corresponds to a time domain index, and the feature bit based on the time domain position may be determined based on the time domain index of the time frequency position for sending the preamble.

In an embodiment, the feature bit determined based on the frequency domain position may be determined based on a frequency domain position of a preamble in the URAT communication. In an embodiment, the terminal has multiple positions for sending preambles in the frequency domain, that is, there are multiple different time frequency positions for sending preambles. Therefore, in case that the terminal sends a preamble, a time frequency position for sending the preamble corresponds to a frequency domain index, and the feature bit based on the time domain position may be determined based on the frequency domain index of the time frequency position for sending the preamble.

The time domain index and the frequency domain index may also be combined and then converted into a binary bit sequence, and the binary bit sequence is used as the feature bit.

S903: the network device sends feedback information 1.

S904: the terminal matches feedback information 1 with feedback information 2 jointly determined by the terminal itself based on the feature bit in the URAT data, the feature bit determined based on the time domain position, and the feature bit determined based on the frequency domain position. In case of determining that feedback information 1 is matched with feedback information 2, the terminal stops sending the URAT data to the network device.

In case that feedback information 1 is mismatched with feedback information 2, it means that feedback information 1 is not feedback information associated with the terminal, and the network device has not successfully received the URAT data sent from the terminal. Therefore, the terminal is required to resend the URAT data to the network device, that is, perform the URAT resending operation.

In this way, the terminal receives feedback information 1 sent from the network device, matches feedback information 1 with feedback information 2 jointly determined by the terminal itself based on the feature bit in the URAT data, the feature bit determined based on the time domain position, and the feature bit determined based on the frequency domain position, and in case of determining that feedback information 1 is matched with feedback information 2, the terminal stops sending the URAT data to the network device. The terminal may avoid repeatedly sending the URAT data to the network device in case that the network device has successfully received the URAT data sent from the terminal, which may not only effectively improve the utilization rate of spectrum resources, but also reduce the delay of URAT communication, which is beneficial to the energy saving of the terminal.

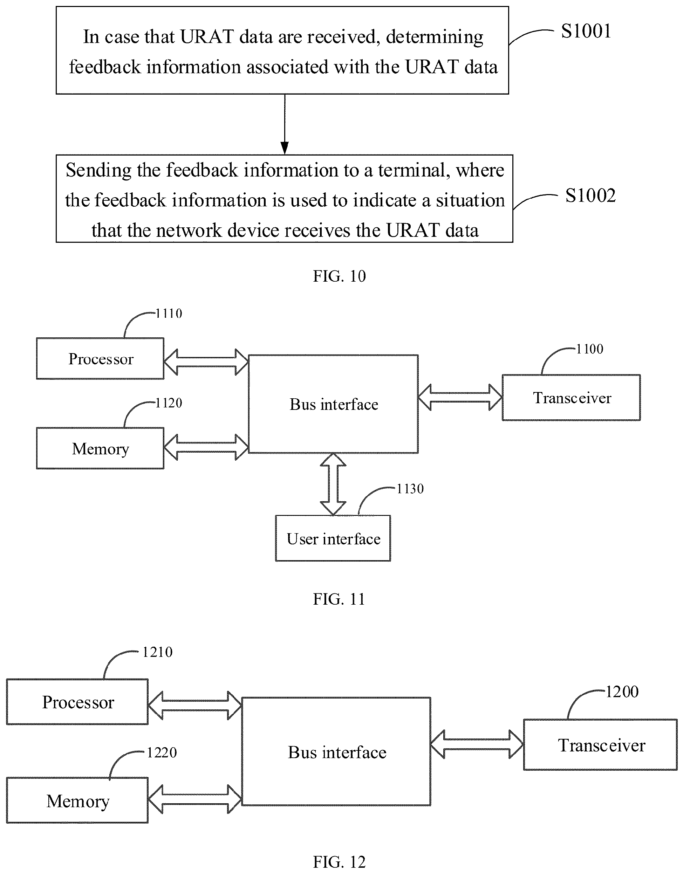

FIG. 10 is a second schematic flowchart of a method for data transmission according to an embodiment of the present application. The method may be performed by a network device. For example, referring to FIG. 10, the method for data transmission may include the following steps.

S1001: in case that uncoordinated random access and transmission (URAT) data are received, determining feedback information associated with the URAT data.

S1002: sending the feedback information to a terminal, where the feedback information is used to indicate a situation that the network device receives the URAT data.

In some embodiments, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In some embodiments, the URAT data are original URAT data, or the URAT data are URAT data encoded from original URAT data.

In some embodiments, the feature bit in the URAT data includes at least one of:
first X feature bits in the URAT data;
middle X feature bits in the URAT data; or
last X feature bits in the URAT data,
where X is a positive integer.

In some embodiments, sending the feedback information to the terminal includes:
sending the feedback information to the terminal within a given time window; or
sending the feedback information to the terminal based on a given time interval.

In some embodiments, a start position of the given time window is adjacent to a time domain position where the URAT data are sent, or a start position of the given time window is not adjacent to a time domain position where the URAT data are sent.

In some embodiments, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In some embodiments, sending the feedback information to the terminal within a given time window includes:
sending the feedback information to the terminal at any time unit within the given time window.

In some embodiments, sending the feedback information to the terminal within the given time window includes:
sending the feedback information to the terminal at a target time domain position, where the target time domain position is determined based on the given time interval.

In some embodiments, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

In the embodiment of the present application, in case of receiving the URAT data, the network device determines the feedback information associated with the URAT data; and sends the feedback information to the terminal, where the feedback information is used to indicate a situation that the network device receives the URAT data. Therefore, the terminal may determine the operation of the terminal in a targeted manner based on the feedback information, where the operation includes stopping sending URAT data to the network device, or resending URAT data to the network device. This may not only effectively improve the utilization rate of spectrum resources, but also reduce the delay of URAT communication, which is beneficial to energy saving of the terminal.

FIG. 11 is a schematic structural diagram of a terminal according to an embodiment of the present application. As shown in FIG. 11, the terminal includes a memory 1120, a transceiver 1100 and a processor 1110.

The memory 1120 is used for storing a computer program, the transceiver 1100 is used for receiving and sending data under control of the processor, and the processor 1110 is used for reading the computer program in the memory 1120 and performing the following operations:
receiving feedback information sent from a network device, where the feedback information is used to indicate a situation that the network device receives uncoordinated random access and transmission (URAT) data; and
determining an operation of the terminal based on the feedback information, where the operation includes stopping sending the URAT data to the network device, or resending the URAT data to the network device.

In an embodiment, the transceiver 1100 is used for receiving and sending data under control of the processor 1110.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, which are well known in the art, and therefore will not be further described in the present application. A bus interface provides an interface. The transceiver 1100 may include multiple elements, i.e., include a transmitter and a receiver, units for providing communication with various other devices over transmission media including wireless channels, wired channels, fiber optic cables, and the like. For different user equipment, a user interface 1130 may be an interface capable of externally or internally connecting the required device, and the connected device includes, but not limited to, a keypad, a display, a speaker, a microphone, a joystick, and the like.

The processor 1110 is responsible for managing the bus architecture and general processing, and the memory 1120 may store data used by the processor 1110 when performing operations.

In an embodiment, the processor 1110 may be a central processing unit (CPU), an application specific integrated circuit (ASIC), a field-programmable gate array (FPGA), or a complex programmable logic device (CPLD), and the processor may also use a multi-core architecture.

The processor is configured to perform any one of the methods of the embodiments of the present application based on an obtained executable instruction by calling the computer program stored in the memory. The processor and memory may also be physically separated.

In an embodiment of the present application, determining the operation of the terminal based on the feedback information includes:
in case that the feedback information is matched with feedback information determined by the terminal, the operation includes stopping sending the URAT data to the network device; or
in case that the feedback information is mismatched with feedback information determined by the terminal, the operation includes resending the URAT data to the network device.

In an embodiment, in case that the terminal does not receive feedback information sent from the network device, resending the URAT data is performed.

In an embodiment of the present application, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment of the present application, the URAT data are original URAT data, or the URAT data are URAT data encoded from original URAT data.

In an embodiment of the present application, the feature bit in the URAT data includes at least one of:
first X feature bits in the URAT data;
middle X feature bits in the URAT data; or
last X feature bits in the URAT data,
where X is a positive integer.

In an embodiment of the present application, receiving feedback information sent from the network device includes:
receiving the feedback information sent from the network device within a given time window; or
receiving the feedback information sent from the network device based on a given time interval.

In an embodiment of the present application, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment of the present application, receiving the feedback information sent from the network device within the given time window includes:
starting monitoring from a start position of the given time window, and receiving the feedback information sent from the network device.

The terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

In an embodiment of the present application, receiving the feedback information sent from the network device based on the given time interval includes:
receiving the feedback information sent from the network device at a target time domain position, where the target time domain position is determined based on the given time interval.

It should be noted here that the above-mentioned terminal provided by the embodiments of the present application may implement all the method steps implemented by the above-mentioned method embodiments performed by the terminal, and may achieve the same effect. The same parts and beneficial effects as the same method embodiments are not repeated in the present application.

FIG. 12 is a schematic structural diagram of a network device according to an embodiment of the present application. As shown in FIG. 12, the network device includes a memory 1220, a transceiver 1200 and a processor 1210.

The memory 1220 is used for storing a computer program, the transceiver 1200 is used for receiving and sending data under control of the processor, and the processor 1210 is used for reading the computer program in the memory 1220 and performing the following operations:
in case that uncoordinated random access and transmission (URAT) data are received, determining feedback information associated with the URAT data; and
sending the feedback information to a terminal, where the feedback information is used to indicate a situation that the network device receives the URAT data.

In an embodiment, the transceiver 1200 is used for receiving and sending data under control of the processor 1210.

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, which are well known in the art, and therefore will not be further described in the present application. A bus interface provides an interface. The transceiver 1200 may include multiple elements, i.e., include a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field-programmable gate array (FPGA), or a complex programmable logic device (CPLD), the processor may also use a multi-core architecture.

In an embodiment of the present application, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment of the present application, the URAT data are original URAT data, or the URAT data are URAT data encoded from original URAT data.

In an embodiment of the present application, the feature bit in the URAT data includes at least one of:
first X feature bits in the URAT data;
middle X feature bits in the URAT data; or
last X feature bits in the URAT data,
where X is a positive integer.

In an embodiment of the present application, sending the feedback information to the terminal includes:
sending the feedback information to the terminal within a given time window; or
sending the feedback information to the terminal based on a given time interval.

In an embodiment of the present application, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment of the present application, sending the feedback information to the terminal within the given time window includes:
sending the feedback information to the terminal at any time unit within the given time window.

In an embodiment of the present application, sending the feedback information to the terminal based on the given time interval includes:
sending the feedback information to the terminal at a target time domain position, where the target time domain position is determined based on the given time interval.

In an embodiment of the present application, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

It should be noted here that the above-mentioned network device provided by the embodiments of the present application may implement all the method steps implemented by the above-mentioned method embodiments performed by the network device, and may achieve the same effect. The same parts and beneficial effects as the same method embodiments are not repeated here.

Embodiments of the present application further provide apparatuses for data transmission, to solve a problem of low utilization rate of spectrum resources caused by performing data transmission using uncoordinated random access and transmission (URAT). The methods for data transmission and the apparatuses for data transmission are based on the same concept. Since the principles of the methods and the apparatuses for solving the problem are similar, the implementation of the apparatuses and the methods may be referred to each other, and repetitions are not described herein.

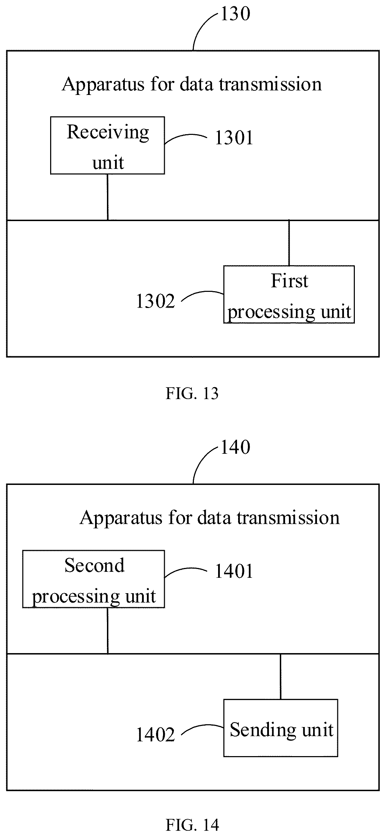

An embodiment of the present application further provides an apparatus for data transmission for use in a terminal. For example, referring to FIG. 13, FIG. 13 is a first structural schematic diagram of an apparatus for data transmission according to an embodiment of the present application, and the apparatus for data transmission 130 includes:
a receiving unit 1301, used for receiving feedback information sent from a network device, where the feedback information is used to indicate a situation that the network device receives uncoordinated random access and transmission (URAT) data; and
a first processing unit 1302, used for determining an operation of the terminal based on the feedback information, where the operation includes stopping sending the URAT data to the network device, or resending the URAT data to the network device.

In an embodiment of the present application, the first processing unit 1302 is used for, in case that the feedback information is matched with feedback information determined by the terminal, determining that the operation includes stopping sending the URAT data to the network device; or in case that the feedback information is mismatched with feedback information determined by the terminal, determining that the operation includes resending the URAT data to the network device.

In an embodiment, in case that feedback information sent from the network device is not received, resending the URAT data is performed.

In an embodiment of the present application, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment of the present application, the URAT data are original URAT data, or the URAT data are URAT data encoded from original URAT data.

In an embodiment of the present application, the feature bit in the URAT data includes at least one of:
first X feature bits in the URAT data;
middle X feature bits in the URAT data; or
last X feature bits in the URAT data,
where X is a positive integer.

In an embodiment of the present application, the receiving unit 1301 is used for receiving the feedback information sent from the network device within a given time window, or receiving the feedback information sent from the network device based on a given time interval.

In an embodiment of the present application, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment of the present application, the receiving unit 1301 is used for starting monitoring from a start position of the given time window, and receiving the feedback information sent from the network device.

The terminal is required to start monitoring from the start position of the given time window, receive the feedback information sent from the network device, and in case of determining that the feedback information is feedback information of the terminal, stop monitoring; or in case that the feedback information is mismatched with feedback information of the terminal, or in case that the feedback information of the terminal is not received, monitor until an end position of the given time window. The given time window may also be agreed in advance by the network device and the terminal, and is used to send and receive the feedback information.

In an embodiment of the present application, the receiving unit 1301 is used for receiving the feedback information sent from the network device at a target time domain position, where the target time domain position is determined based on the given time interval.

It should be noted here that the above-mentioned apparatus for data transmission 130 provided by the embodiments of the present application may implement all the method steps implemented by the above-mentioned method embodiments performed by the terminal, and may achieve the same effect. The same parts and beneficial effects as the same method embodiments are not repeated in the present application.

An embodiment of the present application further provides an apparatus for data transmission for use in a network device. For example, referring to FIG. 14, FIG. 14 is a second structural schematic diagram of an apparatus for data transmission according to an embodiment of the present application, and the apparatus for data transmission 140 includes:
a second processing unit 1401, used for, in case that uncoordinated random access and transmission (URAT) data are received, determining feedback information associated with the URAT data; and
a sending unit 1402, used for sending the feedback information to a terminal, where the feedback information is used to indicate a situation that the network device receives the URAT data.

In an embodiment of the present application, the feedback information includes at least one of:
identity information of a terminal sending the URAT data;
a feature bit in the URAT data;
a feature bit in the URAT data and a feature bit determined based on a time domain position, where the time domain position is a time domain position where the URAT data are sent;
a feature bit in the URAT data and a feature bit determined based on a frequency domain position, where the frequency domain position is a frequency domain position where the URAT data are sent; or
a feature bit in the URAT data, a feature bit determined based on a time domain position and a feature bit determined based on a frequency domain position.

In an embodiment of the present application, the URAT data are original URAT data, or the URAT data are URAT data encoded from original URAT data.

In an embodiment of the present application, the feature bit in the URAT data includes at least one of:
first X feature bits in the URAT data;
middle X feature bits in the URAT data; or
last X feature bits in the URAT data,
where X is a positive integer.

In an embodiment of the present application, the sending unit 1402 is used for sending the feedback information to the terminal within a given time window, or sending the feedback information to the terminal based on a given time interval.

In an embodiment of the present application, a start position of the given time window is adjacent to a time domain position where the URAT data are sent, or a start position of the given time window is not adjacent to a time domain position where the URAT data are sent.

In an embodiment, in case that the start position of the given time window is not adjacent to the time domain position where the URAT data are sent, the start position of the given time window is determined based on a time domain position where the UART data are received and a time interval. In an embodiment, the time interval may be specified by a protocol or configured by the network device.

In an embodiment of the present application, the sending unit 1402 is used for sending the feedback information to the terminal at any time unit within the given time window.

In an embodiment of the present application, the sending unit 1402 is used for sending the feedback information to the terminal at a target time domain position, where the target time domain position is determined based on the given time interval.

In an embodiment of the present application, in case that a quantity of terminals is multiple, a quantity of given time intervals is multiple, and a given time interval corresponding to different terminals is one of multiple given time intervals.

In actual operation, the quantity of given time intervals is usually determined, and an index of the given time interval is in one-to-many association relationship with the terminal. That is, feedback information of different terminals is associated with a certain time interval among multiple time intervals, and different terminals may correspond to the same time interval or different time intervals, which may be determined based on actual needs.

The above-mentioned apparatus for data transmission 140 provided by the embodiments of the present application may implement all the method steps implemented by the above-mentioned method embodiments performed by the network device, and may achieve the same effect. The same parts and beneficial effects as the same method embodiments are not repeated in the present application.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the technical solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

An embodiment of the present application further provides a processor-readable storage medium, where the processor-readable storage medium stores a computer program, and the computer program is used to cause a processor to perform methods provided by the embodiments described above, including: receiving feedback information sent from a network device, where the feedback information is used to indicate a situation that the network device receives uncoordinated random access and transmission (URAT) data; and determining an operation of the terminal based on the feedback information, where the operation includes stopping sending the URAT data to the network device, or resending the URAT data to the network device.

The processor-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, nonvolatile memory (NAND FLASH), a solid-state drive (SSD)), etc.

As appreciated by those skilled in the art, embodiments of the present application may be provided as a method, a system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Therefore, provided that these modifications and variations of the present application fall within the scope of the claims of the present application and their equivalents, the present application is also intended to cover such modifications and variations.

## Claims

1. A method for data transmission, performed by a terminal, comprising:
receiving feedback information sent from a network device, wherein the feedback information is used to indicate a situation that the network device receives uncoordinated random access and transmission, URAT, data; and
determining an operation of the terminal based on the feedback information, wherein the operation comprises stopping sending the URAT data to the network device, or resending the URAT data to the network device.

2. The method of claim 1, wherein determining the operation of the terminal based on the feedback information comprises:
in case that the feedback information is matched with feedback information determined by the terminal, the operation comprises stopping sending the URAT data to the network device; or
in case that the feedback information is mismatched with feedback information determined by the terminal, the operation comprises resending the URAT data to the network device.

3. The method of claim 1 or 2, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

4. The method of claim 3, wherein the URAT data are original URAT data, or the URAT data are URAT data encoded from original URAT data.

5. The method of claim 3, wherein the feature bit in the URAT data comprises at least one of:
first X feature bits in the URAT data;
middle X feature bits in the URAT data; or
last X feature bits in the URAT data,
wherein X is a positive integer.

6. The method of claim 1 or 2, wherein receiving the feedback information sent from the network device comprises:
receiving the feedback information sent from the network device within a given time window; or
receiving the feedback information sent from the network device based on a given time interval.

7. The method of claim 6, wherein a start position of the given time window is adjacent to a time domain position where the URAT data are sent, or a start position of the given time window is not adjacent to a time domain position where the URAT data are sent.

8. The method of claim 6, wherein receiving the feedback information sent from the network device within the given time window comprises:
starting monitoring from a start position of the given time window, and receiving the feedback information sent from the network device.

9. The method of claim 6, wherein receiving the feedback information sent from the network device based on the given time interval comprises:
receiving the feedback information sent from the network device at a target time domain position, wherein the target time domain position is determined based on the given time interval.

10. A method for data transmission, performed by a network device, comprising:
in case that uncoordinated random access and transmission, URAT, data are received, determining feedback information associated with the URAT data; and
sending the feedback information to a terminal, wherein the feedback information is used to indicate a situation that the network device receives the URAT data.

11. The method of claim 10, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

12. The method of claim 11, wherein the URAT data are original URAT data, or the URAT data are URAT data encoded from original URAT data.

13. The method of claim 11, wherein the feature bit in the URAT data comprises at least one of:
first X feature bits in the URAT data;
middle X feature bits in the URAT data; or
last X feature bits in the URAT data,
wherein X is a positive integer.

14. The method of any of claims 10 to 13, wherein sending the feedback information to the terminal comprises:
sending the feedback information to the terminal within a given time window; or
sending the feedback information to the terminal based on a given time interval.

15. The method of claim 14, wherein a start position of the given time window is adjacent to a time domain position where the URAT data are sent, or a start position of the given time window is not adjacent to a time domain position where the URAT data are sent.

16. The method of claim 14, wherein sending the feedback information to the terminal within the given time window comprises:
sending the feedback information to the terminal at any time unit within the given time window.

17. The method of claim 14, wherein sending the feedback information to the terminal based on the given time interval comprises:
sending the feedback information to the terminal at a target time domain position, wherein the target time domain position is determined based on the given time interval.

18. The method of claim 17, wherein in case that a quantity of terminals is multiple, a quantity of given time intervals is multiple, and a given time interval corresponding to different terminals is one of multiple given time intervals.

19. A terminal, comprising a memory, a transceiver and a processor,
wherein the memory is used for storing a computer program, the transceiver is used for receiving and sending data under control of the processor, and the processor is used for reading the computer program in the memory and performing the following operations:
receiving feedback information sent from a network device, wherein the feedback information is used to indicate a situation that the network device receives uncoordinated random access and transmission, URAT, data; and
determining an operation of the terminal based on the feedback information, wherein the operation comprises stopping sending the URAT data to the network device, or resending the URAT data to the network device.

20. The terminal of claim 19, wherein determining the operation of the terminal based on the feedback information comprise:
in case that the feedback information is matched with feedback information determined by the terminal, the operation comprises stopping sending the URAT data to the network device; or
in case that the feedback information is mismatched with feedback information determined by the terminal, the operation comprises resending the URAT data to the network device.

21. The terminal of claim 19 or 20, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

22. The terminal of claim 21, wherein the URAT data are original URAT data, or the URAT data are URAT data encoded from original URAT data.

23. The terminal of claim 21, wherein the feature bit in the URAT data comprise at least one of:
first X feature bits in the URAT data;
middle X feature bits in the URAT data; or
last X feature bits in the URAT data,
wherein X is a positive integer.

24. The terminal of claim 19 or 20, wherein receiving the feedback information sent from the network device comprises:
receiving the feedback information sent from the network device within a given time window; or
receiving the feedback information sent from the network device based on a given time interval.

25. The terminal of claim 24, wherein a start position of the given time window is adjacent to a time domain position where the URAT data are sent, or a start position of the given time window is not adjacent to a time domain position where the URAT data are sent.

26. The terminal of claim 24, wherein receiving the feedback information sent from the network device within the given time window comprises:
starting monitoring from a start position of the given time window, and receiving the feedback information sent from the network device.

27. The terminal of claim 24, wherein receiving the feedback information sent from the network device based on the given time interval comprises:
receiving the feedback information sent from the network device at a target time domain position, wherein the target time domain position is determined based on the given time interval.

28. A network device, comprising a memory, a transceiver and a processor,
wherein the memory is used for storing a computer program, the transceiver is used for receiving and sending data under control of the processor, and the processor is used for reading the computer program in the memory and performing the following operations:
in case that uncoordinated random access and transmission, URAT, data are received, determining feedback information associated with the URAT data; and
sending the feedback information to a terminal, wherein the feedback information is used to indicate a situation that the network device receives the URAT data.

29. The network device of claim 28, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

30. The network device of claim 29, wherein the URAT data are original URAT data, or the URAT data are URAT data encoded from original URAT data.

31. The network device of claim 29, wherein the feature bit in the URAT data comprise at least one of:
first X feature bits in the URAT data;
middle X feature bits in the URAT data; or
last X feature bits in the URAT data,
wherein X is a positive integer.

32. The network device of any of claims 28 to 31, wherein sending the feedback information to the terminal comprises:
sending the feedback information to the terminal within a given time window; or
sending the feedback information to the terminal based on a given time interval.

33. The network device of claim 32, wherein a start position of the given time window is adjacent to a time domain position where the URAT data are sent, or a start position of the given time window is not adjacent to a time domain position where the URAT data are sent.

34. The network device of claim 32, wherein sending the feedback information to the terminal within the given time window comprises:
sending the feedback information to the terminal at any time unit within the given time window.

35. The network device of claim 32, wherein sending the feedback information to the terminal based on the given time interval comprises:
sending the feedback information to the terminal at a target time domain position, wherein the target time domain position is determined based on the given time interval.

36. The network device of claim 35, wherein in case that a quantity of terminals is multiple, a quantity of given time intervals is multiple, and a given time interval corresponding to different terminals is one of multiple given time intervals.

37. An apparatus for data transmission, for use in a terminal, comprising:
a receiving unit, used for receiving feedback information sent from a network device, wherein the feedback information is used to indicate a situation that the network device receives uncoordinated random access and transmission, URAT, data; and
a first processing unit, used for determining an operation of the terminal based on the feedback information, wherein the operation comprises stopping sending the URAT data to the network device, or resending the URAT data to the network device.

38. The apparatus of claim 37, wherein the first processing unit is used for, in case that the feedback information is matched with feedback information determined by the terminal, determining that the operation comprises stopping sending the URAT data to the network device; or in case that the feedback information is mismatched with feedback information determined by the terminal, determining that the operation comprises resending the URAT data to the network device.

39. The apparatus of claim 37 or 38, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

40. The apparatus of claim 39, wherein the URAT data are original URAT data, or the URAT data are URAT data encoded from original URAT data.

41. The apparatus of claim 39, wherein the feature bit in the URAT data comprises at least one of:
first X feature bits in the URAT data;
middle X feature bits in the URAT data; or
last X feature bits in the URAT data,
wherein X is a positive integer.

42. The apparatus of claim 37 or 38, wherein the receiving unit is used for receiving the feedback information sent from the network device within a given time window, or receiving the feedback information sent from the network device based on a given time interval.

43. The apparatus of claim 42, wherein a start position of the given time window is adjacent to a time domain position where the URAT data are sent, or a start position of the given time window is not adjacent to a time domain position where the URAT data are sent.

44. The apparatus of claim 42, wherein the receiving unit is used for starting monitoring from a start position of the given time window, and receiving the feedback information sent from the network device.

45. The apparatus of claim 42, wherein the receiving unit is used for receiving the feedback information sent from the network device at a target time domain position, wherein the target time domain position is determined based on the given time interval.

46. An apparatus for data transmission, for use in a network device, comprising:
a second processing unit, used for, in case that uncoordinated random access and transmission, URAT, data are received, determining feedback information associated with the URAT data; and
a sending unit, used for sending the feedback information to a terminal, wherein the feedback information is used to indicate a situation that the network device receives the URAT data.

47. The apparatus of claim 46, wherein the feedback information comprises at least one of:
identity information of a terminal sending the URAT data;
a feature bit in the URAT data;
a feature bit in the URAT data and a feature bit determined based on a time domain position, wherein the time domain position is a time domain position where the URAT data are sent;
a feature bit in the URAT data and a feature bit determined based on a frequency domain position, wherein the frequency domain position is a frequency domain position where the URAT data are sent; or
a feature bit in the URAT data, a feature bit determined based on a time domain position and a feature bit determined based on a frequency domain position.

48. The apparatus of claim 47, wherein the URAT data are original URAT data, or the URAT data are URAT data encoded from original URAT data.

49. The apparatus of claim 47, wherein the feature bit in the URAT data comprises at least one of:
first X feature bits in the URAT data;
middle X feature bits in the URAT data; or
last X feature bits in the URAT data,
wherein X is a positive integer.

50. The apparatus of any of claims 46 to 49, wherein the sending unit is used for sending the feedback information to the terminal within a given time window, or sending the feedback information to the terminal based on a given time interval.

51. The apparatus of claim 50, wherein a start position of the given time window is adjacent to a time domain position where the URAT data are sent, or a start position of the given time window is not adjacent to a time domain position where the URAT data are sent.

52. The apparatus of claim 50, wherein the sending unit is used for sending the feedback information to the terminal at any time unit within the given time window.

53. The apparatus of claim 50, wherein the sending unit is used for sending the feedback information to the terminal at a target time domain position, wherein the target time domain position is determined based on the given time interval.

54. The apparatus of claim 53, wherein in case that a quantity of terminals is multiple, a quantity of given time intervals is multiple, and a given time interval corresponding to different terminals is one of multiple given time intervals.

55. A processor-readable storage medium, wherein the processor-readable storage medium stores a computer program, and the computer program is used to cause a processor to perform the method for data transmission of any of claims 1 to 9, or perform the method for data transmission of any of claims 10 to 18.
